**Europäisches Patentamt**

**European Patent Office**

**Office européen des brevets**

(19)

(11) Publication number:

**0 136 277**
**A2**

(12) # EUROPEAN PATENT APPLICATION

(21) Application number: **84850250.6**

(22) Date of filing: **27.08.84**

(51) Int. Cl.⁴: **C 10 J 3/20**

(30) Priority: **31.08.83 US 528364**

(43) Date of publication of application: **03.04.85**
**Bulletin 85/14**

(84) Designated Contracting States: **DE FR GB SE**

(71) Applicant: **MARECK B.V., Museumplein 11, NL-1071 DJ Amsterdam (NL)**

(72) Inventor: **Seel, Timothy P., Rte. 1, Box 230 Old Troy Road, Fitzwilliam New Hampshire 03447 (US)**
Inventor: **Brochu, Richard R., 253 Gilsum Street, Keene New Hampshire 03431 (US)**

(74) Representative: **Horney, Johan et al, H. Albihns Patentbyra AB Box 7664, S-103 94 Stockholm (SE)**

(54) **Gasifier and method for producing combustible gases from biomass material.**

(57) An improved gasifier and method for production of combustible gases from biomass fuels are disclosed in which a massive refractory layer has a first inclined fuel supporting surface or ramp. Massive refractory is provided above and opposing the first fuel supporting surface within a primary gasification chamber. Another mass of refractory cooperates with the first inclined fuel supporting surface of the massive refractory ramp to provide an air seal upon fuel delivery and thereby avoid the disadvantageous introduction of air into the pyrolysis zone of the gasifier. During gasifier operation, massive refractory heats to high temperature. Biomass fuel delivered to a carbonization zone releases volatile gases by virtue of heat radiation from the massive refractory, and as a consequence of the reflection of heat generated in the combustion zone from massive refractory surfaces within the primary chamber. Additionally, the gasifier includes a lower refractory layer having a second inclined surface or ramp. In a preferred embodiment, the second surface has a plurality of air inlet holes therethrough to provide air distribution only in a specific and concentrated combustion zone located below the carbonization zone. The lower refractory layer second inclined surface is appropriately inclined at an angle of inclination or steepness greater than the first fuel supporting surface of the massive refractory layer to provide for continuous and smooth flow of biomass fuel through respective zones of the gasification chamber.

FIELD OF THE INVENTION

This invention relates to apparatus for generating volatile and combustible gases from renewable fuel sources, and, more specifically, to an improved gasifier including an inclined massive refractory fuel supporting ramp and massive refractory above and opposing the fuel pile in a pyrolysis zone to stabilize and improve the efficiency of the gasification process, and further including a lower refractory ramp inclined to assure optimum fuel flow within the combustion zone.

BACKGROUND OF THE INVENTION

Many combustion devices, such as furnaces and boilers in use today, have been designed to burn fossil fuels only in a liquid or a gaseous state. This has arisen as a consequence of the availability of traditionally low cost fossil fuel such as oil or natural gas. The well-publicized escalation of oil and natural gas costs in recent years has resulted in extremely high costs of operation for combustion devices intended to use such fuels.

Means to avoid the prohibitive expense of operation of these combustion devices in view of the upwardly spiralling trend in fossil fuel costs is obviously of considerable commercial import. One convenient means of converting renewable solid fuels (biomass) into a useable gaseous form is the technique of gasification in which biomass materials are pyrolized and, gases generated which may then be used within the above-mentioned combustion devices at high efficiency.

Despite the benefits associated with the use of gasification equipment, the application of such equipment has not been wide-spread. This result has obtained for several reasons. Typically, gasification equipment has included internal metal components which when subjected to high temperature, suffer deterioration in the form of erosion and/or corrosion through use in the extremely hot and complex combustion environment. As a consequence of such deterioration repeated shutdowns have been necessitated and prolonged periods of costly maintenance required. Another problem associated with earlier gasification equipment is apparent in the unreliability of such equipment. Gasification apparatus has utilized inordinately complex hardware which has been prone to failure. Moreover, the stability of gas generation from prior gasification apparatus has often been less than adequate because of the inability of the apparatus to cope with variations in the gas demand requirements and additionally variations in the makeup of biomass fuel sources. Even minor variations in biomass fuel gas generating characteristics are known to have a disruptive influence on the stability of the gasification process.

Several patents disclose gasification apparatus in which attempts have been made to improve the gasification process. U.S. Patent 4,030,895 of the present assignee discloses a reactor for generating combustible fuel gases in which biomass fuel is fed from a conveyor through a diverging fuel inlet section to an inclined metal grate. The fuel is pyrolized to drive off volatile gases as it slides downward along the inclined grate to a combustion region where combustible carbon monoxide gas is produced. The inclined grate disclosed in the '895 patent includes air inlet apertures along the full length of the grate. Control of gas generation in the disclosed apparatus is dependent upon the control of air to the combustion region adjacent the lower portion of the grate. In operation, premature disintegration of the inclined grate, employed as a fuel support, occurs, necessitating maintenance more often than desirable for commercial application. Additionally, variations in gas output demand are disruptive of the gasification process.

U.S. Patent 4,095,958 of the same inventor and assignee as the '895 patent attempts to alleviate the problem associated with premature grate disintegration by sourcing air continuously to a plenum along the underside of the grate and by providing heat transfer fins to further augment heat removal from the grate. The grate of the disclosed apparatus is provided with a regular pattern of holes to avoid the formation of hot spots along the grate and to minimize the formation of slag. The presence of holes along the entire length of the grate in the disclosed apparatus causes undesirable combustion within a carbonization region along the upper portion of the grate.

Apparatus which achieves pyrolysis without direct combustion is disclosed in U.S. Patent 2,187,872 and Netherlands Patent 16914 by means of indirectly heating the fuel. The disclosed apparatus in the two identified patents both direct hot gases resulting from gasification into the combustion zone and through the biomass fuel to achieve pyrolysis of the fuel.

U.S. Patent 1,813,156 discloses a furnace in which hot gases resulting from combustion are used directly to heat the contents of a boiler. The chamber of the furnace includes courses of brick arched in a manner intended to reflect and radiate a large amount of the heat back into the gases to further build up the temperature of the burning gases.

## SUMMARY OF THE INVENTION

An improved gasifier and method for production of combustible gases from renewable biomass fuels is disclosed. In accordance with the present invention, refractory materials of substantial thickness are selectively disposed within a retort in a manner which enhances the reliability, efficiency and stability of combustible gas production biomass. Fuel flows through the retort along a massive refractory layer having a first inclined surface or ramp and through a vaporization zone and a carbonization zone. The ramp is inclined from a fuel entry opening in the top rearward portion of the retort at a selected angle of inclination or steepness to achieve a desired flow rate of biomass material along the ramp. Opposing the first inclined surface is a frontal refractory layer disposed along the front wall of the retort. The refractory layer and ramp have substantial mass and thickness, and serve to reflect and radiate heat so as to produce a stable pyrolysis reaction within the carbonization zone adjacent the first inclined surface. The use of massive refractory for the inclined ramp and frontal layer in accordance with the present disclosure provide several benefits. In addition to the pyrolysis stabilizing effect previously indicated, the refractory ramp is not plagued with problems of deterioration common to some prior fuel conveying systems and particularly systems incorporating metal grates. Moreover, since the ramp is typically a solid refractory layer, air is not delivered to the carbonization region through the ramp, and undesirable combustion of volatile gases in the carbonization zone is thus avoided. The added refractory mass additionally achieves more stable gas production by providing a substantial thermal mass which minimizes disturbing effects associated with wide variations in load requirements.

In one embodiment of the invention, a downward projecting refractory tongue extends into the gasifier retort to produce a converging region between the tongue and the inclined refractory ramp. Biomass material is fed into the fuel entry chamber above the retort and is gravity fed to the converging region between the tongue and the ramp. The biomass material packs between the tongue and the ramp so as to produce an effective air seal and minimize the undesirable entry of air into the carbonization zone and associated combustion of volatile gases that would accompany such air entry.

Additionally, the gasifier in accordance with the present invention includes means for concentrating the primary air supply directly into the carbon pile so as to produce combustion only in a specified combustion zone or region. The rate of carbon oxidation within the combustion zone controls the rate of biomass fuel input and consequently the total power output in the form of gas production. In a preferred embodiment of the invention air is introduced to the carbon pile through holes in a refractory brick or cast layer having second inclined surface or ramp.

The second ramp is inclined at an angle of inclination or steepness greater than the angle of inclination or steepness of the first inclined ramp to permit free and consistent flow of biomass fuel through respective zones of the gasification chamber. The use of refractory for the second inclined ramp assures longevity of a part within the gasification chamber subjected to extreme temperatures and complex chemical reactions and thus avoids the problem of grate deterioration common to prior gasifiers.

The method of gasification in accordance with the present invention includes the step of feeding biomass fuel to a gasification chamber to create a fuel pile along the first inclined surface of a refractory ramp and to maintain the fuel pile at a desired level and fuel bed thickness. A restricting and converging throat portion is provided and means are provided for maintaining the throat portion packed with fuel so as to form an effective air seal therein. The biomass fuel is pre-heated by heat primarily radiated and conducted from a refractory mass adjacent the throat portion. Moisture is released in a vaporization zone just below the throat portion due to heat radiated and conducted by massive refractory provided within the gasification chamber. The fuel pile is pyrolized to extract volatile gases from the biomass fuel in a carbonization zone located below the vaporization zone by providing a stable source of heat in the form of heat radiated from the first inclined surface and frontal refractory layer and resulting from heat reflected from the frontal refractory layer. Carbonized fuel flows into a combustion zone located below the carbonization zone and air is delivered in a controlled manner to achieve combustion of the carbonized material and release of combustible gases. In a final delivery step, volatile gases produced during pyrolysis and combustible gases released during combustion of carbonized fuel in the combustion zone are drawn from the gasification chamber by a fan or other suitable means for application to an associated combustion device such as a furnace or boiler.

## BRIEF DESCRIPTION OF THE DRAWINGS

The following detailed description will be understood in conjunction with the accompanying drawings in which:

Fig. 1 is a partial side sectional view of a prior art gasifier illustrating layers of steel, insulation and refractory lining;

Fig. 2 is a side sectional view of a gasifier incorporating a massive refractory layer having a first inclined ramp and a second inclined refractory ramp positioned in accordance with the present invention;

Fig. 3 is a top view of the gasifier of Fig. 2; and

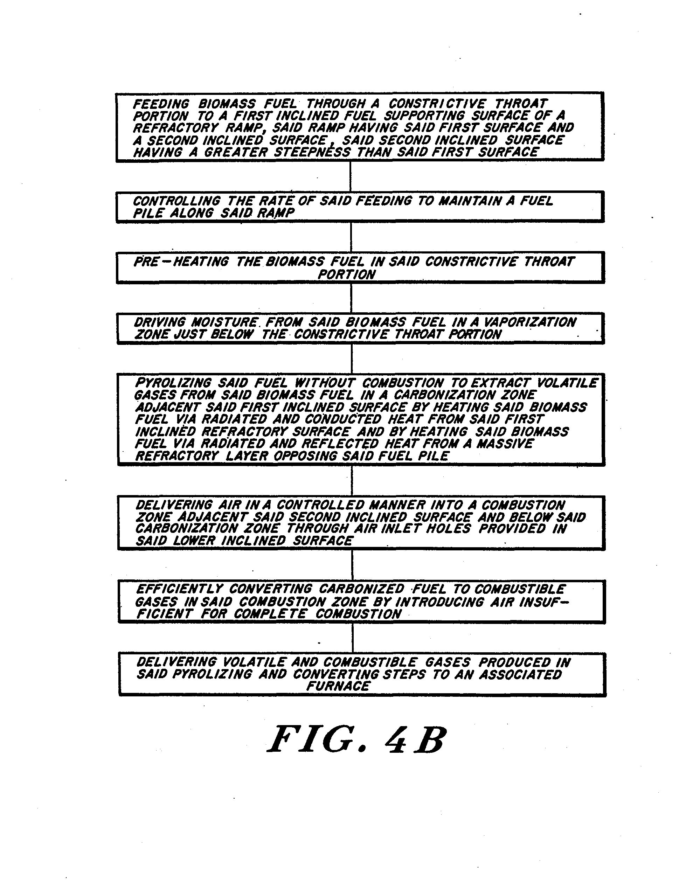

Figs. 4A and 4B illustrate the process of gasification in accordance with the present invention.

## DETAILED DESCRIPTION OF THE INVENTION

In accordance with the present invention, an apparatus and method for producing combustible gases from biomass fuels is disclosed. The present invention achieves stable and reliable gas production by selective disposition and incorporation of massive refractory within a gasification chamber.

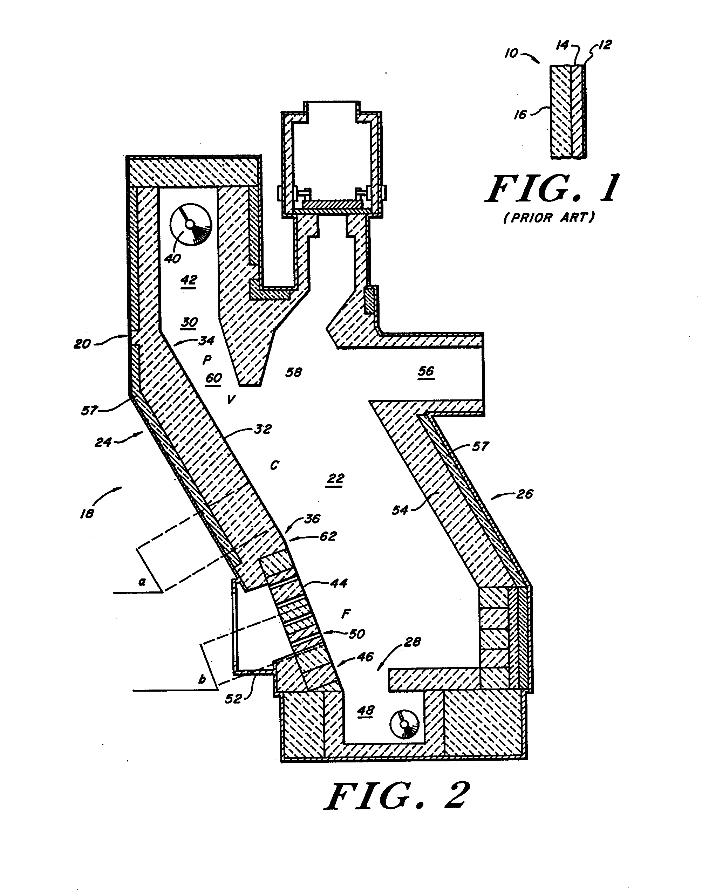

Referring to Fig. 1, the lining 10 of a typical prior art gasifier is illustrated. The lining 10 comprises an outer metallic shell 12, a layer of insulation 14 confronting the outer shell 12, and a lining of refractory material 16 confronting the layer of insulation 14. The refractory lining 16 is oriented inward toward the heat source, and in prior gasification equipment, is intended to protect the gasification apparatus from the extreme temperatures produced in the combustion chamber. Typically, the outer shell 12 is fabricated of a material such as 1/8" steel, the insulation 14 is a 1-1/2" thick mineral wool block or other similar insulation, and the refractory lining 16 is a 3" thick refractory lining.

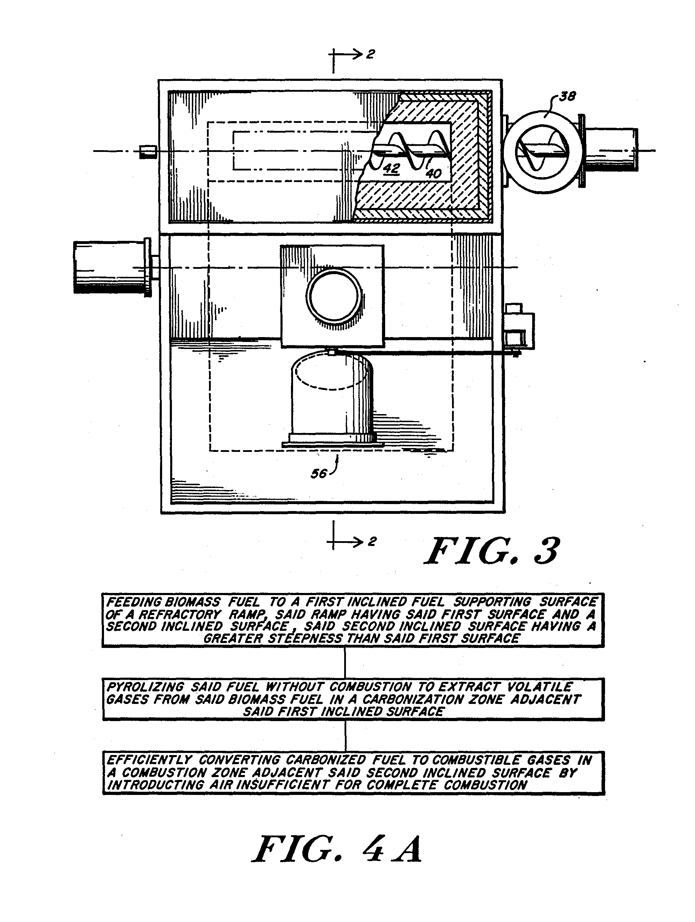

A gasifier operative in accordance with the present invention is illustrated in Figs. 2 and 3. The gasifier 18 includes a retort or outer shell 20 which is fabricated of a metal such as steel. In a preferred embodiment of the invention, the retort 20 is bent, welded, or otherwise shaped and formed to provide a retort 20 having a gasification chamber 22 within the retort 20. As shown in Fig. 2, the retort 20 includes a rear wall 24, a front wall 26, a base 28, and a fuel entry opening 30 in the upper region of the retort. A massive refractory layer 32 having an upper inclined surface is disposed along the rear wall 24 of the gasifier 18 and inclines, downward from an upper inclined ramp section 34 to a lower inclined ramp section 36. The inclined ramp 32 may be fabricated of any suitable refractory material, such as HARCAST, produced by the Harbison-Walker Company. The refractory is cast to form a ramp 32 of desired shape. Alternatively, the ramp 32 may be fabricated of any other refractory material having similar characteristics. The ramp 32 is formed of refractory material of thickness typically greater than 7.5 inches.

Biomass fuel is delivered to the gasifier 18 through a hopper 38, illustrated in Fig. 3. A screw conveyor 40 is employed to distribute the biomass fuel laterally across the width of the fuel delivery opening 30 located at the lower extreme of a fuel entry chamber 42. Biomass fuel delivered to the fuel entry chamber 42 flows by gravity feed downward through the fuel delivery opening 30 along the inclined refractory ramp 32 through a preheating zone P, a vaporization zone V, and a carbonization zone C. The ramp 32 is inclined from the fuel entry opening 30 at a selected angle of inclination to achieve a desired flow rate of biomass material along the ramp through the respective zones.

A ramp 44 having an interior facing second inclined surface is disposed below the massive inclined ramp 32 and extends from the lower ramp end 36 of the ramp 32 to the base region 28 of the retort 18. The lower end 46 of the lower ramp 44 is oriented such that expended biomass fuel, in the form of ash, flows directly into an ash removal trough 48, located in the base region 28 of the retort 18. The ramp 44 is fabricated of a refractory material, such as NUCON, which is less subject to deterioration when subjected to extreme temperatures and complex chemical reactions found within the combustion zone F directly adjacent the ramp 44 than conventional metal grates. Air inlet holes 50 are provided in the ramp 44 in a preferred embodiment of the invention and an air plenum 52 is positioned on the rear wall 24 of the retort 20 to permit introduction of air through air inlet holes 50 of the ramp 44. Means are provided for introduction of the air at a controlled rate and pressure through the plenum 52 and air inlet holes 50.

The massive inclined ramp 32 is oriented such that the upper surface of the ramp is inclined at a first angle "a" of inclination and the ramp 44 is oriented such that the upper surface of the ramp is inclined a second angle "b" of inclination or steepness. The second angle "b" of inclination or steepness is greater than the first angle "a" to achieve free and consistent flow of biomass fuel through the preheating, vaporization, carbonization, and combustion zones respectively.

Biomass fuel, upon pyrolysis and after carbonization within the carbonization zone C, obtains a different angle of repose, necessitating a steeper incline in accordance with the present disclosure, to achieve the desired fuel flow.

To achieve smooth sliding of wood chips along the ramp 32, the ramp 32 is typically provided with an angle of inclination "a" of approximately 60° and the air inlet ramp 44 is provided with an angle of inclination "b", of 70°. It is apparent that other angles of inclination are appropriate for other biomass fuels since different biomass fuels have different angles of repose.

A massive refractory frontal layer 54 is disposed in opposed relation to the massive inclined ramp 32 and is located to confront the front wall 26 of the retort 20. In one embodiment of the invention, the frontal refractory layer has an interior surface inclined at an angle substantially equivalent to the angle "a" of inclination of the first surface of the massive refractory layer 32, although this angular equivalence is not required for operation in accordance with the present invention. An opening 56 is provided in the frontal refractory layer 54 to permit withdrawal of volatile and combustible gases from the gasification chamber 32. Withdrawal of gases is typically achieved by means of suction induced by a fan (not shown) or any other suitable means. Volatile and combustible gases withdrawn from the gasification chamber are delivered to the fire box of a boiler, furnace, or other combustion device using gaseous or liquid fuels.

Insulation 57 is typically provided between the massive refractory material and the outer wall of the retort 20. The insulation 57 serves to improve the heat retention properties of the gasifier. One form of insulation, known as MONOBLOCK, has been successfully employed in a preferred embodiment of the invention, although it is apparent that any suitable insulation material may be substituted.

A tongue 58 of refractory material extends downward from the upper region and laterally across the gasification chamber 22 toward the inclined refractory ramp 32 so as to produce a constricting throat 60 between the tongue 58 and the ramp 32 along the entire width of the gasification chamber 22. Fuel delivered to the fuel entry chamber 42 feeds by gravity through the fuel delivery opening 30 to the throat 60 and is packed by reason of the constricting throat 60. Packing of the biomass fuel in the throat 60 region produces an air seal and precludes the undesirable introduction of air into the carbonization zone C of the gasification chamber 22. The entry of air into the carbonization zone C would result in undesirable combustion of volatile gases released in that zone, and the presence of the air seal provided in the manner indicated minimizes such disadvantageous combustion.

During operation of the gasifier, fuel is delivered evenly across the fuel entry opening 30 by the conveyor 40, which in the present embodiment is shown to be a screw conveyor. Biomass fuel drops downward within the fuel entry chamber 42, and, as previously discussed, is compacted due to constriction in the throat 60 region formed between the tongue 58 and the massive refractory ramp 32. The tongue 58 is heated from its lower frontal portion by hot gases rising from the combustion zone F, as well as by radiant heat from that zone. The heat conducted and radiated from the refractory tongue 58 serves to preheat fuel in the throat 60 region and commence vaporization of remaining moisture in the biomass fuel. Free moisture is completely vaporized within the vaporization zone V located below the preheating zone P. As the biomass fuel continues to slide downward from the vaporization zone V, it is subjected to intense radiated and reflected heat in a carbonization zone C. Radiated heat is provided by the massive refractory ramp 32, the tongue 58, and the frontal refractory layer 54. Additionally, heat generated in the combustion zone F is reflected from the frontal refractory layer 54 and back upon the fuel pile in the carbonization zone C. The frontal refractory layer, in steady state operation, is heated to a temperature of approximately 1200-1400°F, and is incandescent. In one embodiment of the invention, the frontal refractory layer 54 is angled so as to reflect heat generated within the combustion zone F directly back upon the biomass fuel pile in the carbonization zone to achieve optimum pyrolysis within the carbonization zone C. The frontal refractory layer 54 typically is formed of refractory material of thickness greater than 4.5 inches, and as discussed, offers significant benefits compared to gasification equipment incorporating linings of approximately 3 inches.

As the biomass fuel slides downward along the inclined refractory ramp 32, the fuel is pyrolyzed in the carbonization zone C as discussed. By the time the fuel reaches the point of inflection 62 between the inclined refractory ramp 32 and the refractory ramp 44, the biomass fuel has been totally carbonized. Once the biomass fuel has been carbonized in the carbonization zone C, the fuel does not flow as readily as noncarbonized fuel. Thus the angle of inclination or steepness of the ramp 44 is selected to maintain the flow of carbonized fuel smooth in relation to the rate of flow of fuel along the massive refractory ramp 32 above. As the carbonized fuel slides over the ramp 44, the fuel combusts in the presence of oxygen supplied through the air inlets 50 and the air plenum 52. Oxidation of the carbonized fuel in the combustion zone F results in the production of combustible gas, primarily in the form of carbon monoxide and amounts of noncombustible carbon dioxide. Upon complete combustion of the carbonized fuel, only ash remains as a by-product of combustion, and the ash flows into the trough 48 in the base 28 of the retort 20.

In another embodiment of the invention holes are provided in sidewall refractory material, or the frontal refractory layer instead of or in addition to air inlet holes provided in the ramp 44 to promote uniform combustion within the combustion zone F.

The presently disclosed apparatus provides substantially improved gas production under conditions of varying load requirements. For example, a demand for increased gas production, momentarily results in greater combustion of carbonized fuel in the combustion zone F resulting in higher temperature in the combustion zone F. As more carbonized fuel is oxidized and reduced to ash, more fuel slides along the ramp 32 into the carbonization zone C. The greater heat generated within the combustion zone F is reflected from the frontal refractory layer 54 onto the fuel in the carbonization zone C, thereby producing greater volumes of volatile gases. The volatile gases are cooler than the combustible gases released in the combustion zone F. These cooler volatile gases lower the total gas temperature, thereby maintaining the system in balance. More specifically, more stable internal temperatures and gas compositions are maintained. Prior systems not incorporating massive refractory exhibited wide variations in temperature and gas composition within the gasification region 22 as a result of varying demands for gas output. Specifically, a combustion zone in some prior gasifiers might exhibit extremely hot temperatures under a demand condition while a carbonization zone exhibited undesired cooling as a consequence of greater fuel flow within the carbonization zone, thereby causing inadequate pyrolysis under demand conditions.

It will be appreciated that the massive refractory ramp 32 and the air inlet ramp 44 need not have planar surfaces as illustrated in the present embodiment, but may comprise curves or shapes varying to achieve the desired flow disclosed herein.

The above described gasifier and method for producing volatile and combustible gases from biomass fuel is merely illustrative of the present invention. Other modifications, embodiments, and departures from the present disclosure are possible without departing from the inventive concept contained herein. Consequently, the invention is to be viewed as embracing each and every novel feature and novel combination of features present in or possessed by the apparatus herein disclosed, and are to be limited solely by the scope and spirit of the appended claims.

## CLAIMS

What is claimed is:

1.    An improved gasifier for producing from biomass fuels combustible gases suitable for delivery to the firebox of a furnace comprising of:

a confining retort having rear and front walls, opposing sidewalls, a top, a base, and defining a gasification chamber within said retort;

a first layer of refractory material disposed within said retort having substantial mass and thickness, having a first interior surface that opens to the chamber, said first interior surface extending laterally and downwardly at a first steepness, said first interior surface having an upper region;

said first interior surface having said first steepness, providing a supporting bed for gravitational movement of biomass fuel through a pre-heating zone, a vaporization zone in which excess moisture is driven from said biomass fuels, and a carbonization zone in which biomass fuels are pyrolized to release volatile gases;

a second layer of refractory material disposed within said retort subjacent said first layer and having a second interior surface that opens to the chamber, said second interior surface extending laterally and downwardly at a second steepness greater than said first steepness.

2.    The gasifier of claim 1 including means for introducing air in a controlled manner to a combustion zone within said retort, said combustion zone being adjacent to said second layer and below the carbonization zone, said biomass fuels releasing combustible gas within said combustion zone upon combustion therein.

3. The gasifier of claim 2 wherein said second layer includes a plurality of air inlet holes therethrough and said air introducing means includes means for introducing air in a controlled manner through said plurality of air inlet holes.

4. The gasifier of claim 1 including a refractory layer disposed in confronting relation with each of said opposing retort sidewalls.

5. The gasifier of claim 4 wherein a plurality of air inlet holes is provided in at least one of said refractory sidewalls and further including air introducing means for introducing air in a controlled manner through at least one of said plurality.

6. The gasifier of claim 1 including a frontal layer of refractory having substantial mass disposed in opposing relation to said first layer, said frontal layer disposed to confront the front wall of said retort.

7. The gasifier of claim 6 wherein said frontal portion of refractory is disposed at a steepness substantially similar to the first steepness.

8. The gasifier of claim 6 wherein a plurality of air inlet holes is provided in said frontal refractory layer and further including means for introducing air in a controlled manner through said plurality to said combustion zone.

9. The gasifier of claim 1 including means for delivering biomass fuel to the upper region of said first interior surface.

10. The gasifier of claim 9 wherein said biomass fuel delivering means includes a conveyor operative to deliver biomass fuel substantially uniformly along the width of said first layer first interior surface upper region.

11. The gasifier of claim 10 wherein said conveyor is a screw conveyor.

12. The gasifier of claim 1 including:

means for delivering biomass fuel to the first interior surface of the first layer through a fuel entry opening in the top of said retort; and

means for providing an air seal at said opening upon delivery of biomass fuel to said first layer first interior surface to preclude undesirable combustion of volatile gases in said carbonization zone.

13. The gasifier of claim 12 wherein said air seal providing means includes a refractory tongue extending downward through said retort top opening so as to produce·a restrictive throat between the first layer first interior surface and the downward extending tongue, the packing of biomass fuel within said throat upon fuel delivery to said upper region of said first interior surface producing said air seal.

14. The gasifier of claim 1 wherein said biomass fuel has an identified angle of repose and said first and second angle steepnesses for said first and second refractory layers are selected to achieve free flow of biomass fuel downward along said first and second layers, as the angle of repose of said biomass fuel varies along said respective layers.

15. The gasifier of claim 1 including means for removal of ash from said retort base region, said ash produced by combustion of carbonized fuel in the combustion zone of said gasification chamber.

16. The gasifier of claim 15 wherein said ash removal means comprises a conveyor.

17. The gasifier of claim 6 wherein said frontal refractory layer includes an opening for withdrawal of volatile and combustible gases produced in said gasification chamber.

18. The gasifier of claim 17 further including means for delivering said volatile and combustible gases to the firebox of a furnace.

19. The gasifier of claim 1 wherein said first layer is a cast layer of refractory.

20. The gasifier of claim 6 wherein said first layer is a cast layer of refractory, and said frontal refractory layer is a cast layer of refractory.

21. The gasifier of claim 1 wherein said second layer of refractory material is refractory brick.

22. The gasifier of claim 1 including a layer of insulation between said retort rear wall and said first layer of refractory.

23. The gasifier of claim 6 including a layer of insulation between said retort rear wall and said first layer and a layer of insulation between said retort front wall and said frontal refractory layer.

24. The gasifier of claim 1 wherein said first refractory layer has a thickness in excess of 7.5 inches.

- 18 -

0136277

25. The gasifier of claim 6 wherein said first refractory layer has a thickness in excess of 7.5 inches and said frontal refractory layer has a thickness in excess of 4.5 inches.

26. An improved gasifier for producing from biomass fuels combustible gases suitable for delivery to the fire box of a furance comprising:

a confining retort having rear and front walls, opposing sidewalls, a top, a base, and defining a gasification chamber within said retort;

a first ramp of refractory material disposed within said retort and having substantial mass and thickness, the first ramp having an upper surface sloping from the upper region of said gasification chamber downward at a predetermined first angle of inclination to a lower end of said ramp;

the upper surface of said first ramp providing a supporting bed for gravitational movement of biomass fuel through a preheating zone, a vaporization zone in which excess moisture is driven from said biomass fuel, and a carbonization zone in which biomass fuel is pyrolized to release volatile gases; and

a second ramp of refactory material disposed within said retort and sloping downward from said first ramp lower end to said retort base at a second angle of inclination greater than said first angle of inclination.

27. An improved gasifier for producing from biomass fuels combustible gases suitable for delivery to the firebox of a furnace comprising:

a confining retort having rear and front walls, opposing side walls, a top, a base, and defining a gasification chamber within said retort;

a first ramp of refractory material disposed within said retort and having substantial mass and thickness, the first ramp having an upper surface sloping from the upper region of said gasification chamber downward at a predetermined first angle of inclination to a lower end of said ramp;

a fuel delivery chamber disposed above said retort, and located for delivery of biomass fuel through an opening in the top of said retort to the upper surface of said first ramp;

means for deliverying biomass fuel having an identified angle of repose to the upper surface of said first ramp, through said fuel delivery chamber, the upper surface of said first ramp providing a supporting bed for gravitational movement of biomass fuel within said gasification chamber to a preheating zone, a vaporization zone in which excess moisture is driven from said biomass fuels, and a carbonization zone in which biomass fuels are subjected to pyrolysis to release volatile gases;

the angle of inclination of said first ramp selected to assure free flow of biomass fuel and accommodate the angle of repose of said biomass fuel during pyrolysis in said carbonization zone;

a second ramp of refractory material disposed within said retort and sloping downward from said first ramp lower end to said retort base at a second angle of inclination greater than said first angle of inclination, said second ramp having a plurality of air inlet holes therethrough;

means for introducing air in a controlled manner through said air inlet holes to a combustion zone within the retort, said combustion zone being adjacent the second ramp and below the carbonization zone, said biomass fuels releasing combustible gases during combustion of said fuel within said combustion zone;

a frontal portion of refractory having substantial mass disposed in fixed opposing relation to said first ramp along the front wall of said retort, said frontal portion of refractory oriented to radiate heat and reflect heat from the combustion zone upon the biomass fuel in the carbonization zone to improve carbonization efficiency;

said frontal refractory portion having an opening for withdrawal of volatile and combustible gases from the gasification chamber;

a tongue of refractory material projecting downward into the gasification chamber and extending laterally across the width of said chamber, said tongue cooperating with said first ramp to pack biomass fuel upon gravity feed of said fuel into a constricting region between said ramp and said tongue, the packing of biomass fuel in said constricting region forming an air seal which prevents undesirable introduction of air into the carbonization zone and associated combustion of volatile gases within the carbonization zone;

side wall refractory disposed on the interior of opposing retort side walls; and

means for removal of ash from the base of the retort.

28.   A method for producing from biomass fuels combustible gases comprising the steps of:

feeding biomass fuel to a first inclined fuel supporting surface of a refractory ramp, said ramp having said first surface and a second inclined surface, said second inclined surface having a greater steepness than said first surface;

pyrolizing said fuel without combustion to extract volatile gases from said biomass fuel in a carbonization zone adjacent said first inclined surface; and

efficiently converting carbonized fuel to combustible gases in a combustion zone adjacent said second inclined surface by introducing air insufficient for complete combustion.

29.    Feeding biomass fuel through a constrictive throat portion to a first inclined fuel supporting refractory surface of a refractory ramp, said ramp having said first surface and a second inclined surface, said second inclined surface having a greater steepness than said first surface;

controlling the rate of said feeding to maintain a fuel pile along said ramp;

pre-heating the biomass fuel in said constrictive throat portion;

driving moisture from said biomass fuel in a vaporization zone just below the constrictive throat portion;

pyrolizing said fuel without combustion to extract volatile gases from said biomass fuel in a carbonization zone adjacent said first inclined surface by heating said biomass fuel via radiated and conducted heat from said first inclined refractory surface and by heating said biomass fuel via radiated and reflected heat from a massive refractory layer opposing said fuel pile;

delivering air in a controlled manner into a combustion zone adjacent said second inclined surface and below said carbonization zone through air inlet holes provided in said lower inclined surface;

efficiently converting carbonized fuel to combustible gases in said combustion zone by introducing air insufficient for complete combustion; and

delivering volatile and combustible gases produced in said pyrolizing and converting steps to an associated furnace.

**FIG. 1**
*(PRIOR ART)*

**FIG. 2**

FIG. 3

FEEDING BIOMASS FUEL TO A FIRST INCLINED FUEL SUPPORTING SURFACE OF A REFRACTORY RAMP, SAID RAMP HAVING SAID FIRST SURFACE AND A SECOND INCLINED SURFACE, SAID SECOND INCLINED SURFACE HAVING A GREATER STEEPNESS THAN SAID FIRST SURFACE

PYROLIZING SAID FUEL WITHOUT COMBUSTION TO EXTRACT VOLATILE GASES FROM SAID BIOMASS FUEL IN A CARBONIZATION ZONE ADJACENT SAID FIRST INCLINED SURFACE

EFFICIENTLY CONVERTING CARBONIZED FUEL TO COMBUSTIBLE GASES IN A COMBUSTION ZONE ADJACENT SAID SECOND INCLINED SURFACE BY INTRODUCING AIR INSUFFICIENT FOR COMPLETE COMBUSTION

FIG. 4A

0136277

3/3

FEEDING BIOMASS FUEL THROUGH A CONSTRICTIVE THROAT PORTION TO A FIRST INCLINED FUEL SUPPORTING SURFACE OF A REFRACTORY RAMP, SAID RAMP HAVING SAID FIRST SURFACE AND A SECOND INCLINED SURFACE, SAID SECOND INCLINED SURFACE HAVING A GREATER STEEPNESS THAN SAID FIRST SURFACE

CONTROLLING THE RATE OF SAID FEEDING TO MAINTAIN A FUEL PILE ALONG SAID RAMP

PRE-HEATING THE BIOMASS FUEL IN SAID CONSTRICTIVE THROAT PORTION

DRIVING MOISTURE FROM SAID BIOMASS FUEL IN A VAPORIZATION ZONE JUST BELOW THE CONSTRICTIVE THROAT PORTION

PYROLIZING SAID FUEL WITHOUT COMBUSTION TO EXTRACT VOLATILE GASES FROM SAID BIOMASS FUEL IN A CARBONIZATION ZONE ADJACENT SAID FIRST INCLINED SURFACE BY HEATING SAID BIOMASS FUEL VIA RADIATED AND CONDUCTED HEAT FROM SAID FIRST INCLINED REFRACTORY SURFACE AND BY HEATING SAID BIOMASS FUEL VIA RADIATED AND REFLECTED HEAT FROM A MASSIVE REFRACTORY LAYER OPPOSING SAID FUEL PILE

DELIVERING AIR IN A CONTROLLED MANNER INTO A COMBUSTION ZONE ADJACENT SAID SECOND INCLINED SURFACE AND BELOW SAID CARBONIZATION ZONE THROUGH AIR INLET HOLES PROVIDED IN SAID LOWER INCLINED SURFACE

EFFICIENTLY CONVERTING CARBONIZED FUEL TO COMBUSTIBLE GASES IN SAID COMBUSTION ZONE BY INTRODUCING AIR INSUF-FICIENT FOR COMPLETE COMBUSTION

DELIVERING VOLATILE AND COMBUSTIBLE GASES PRODUCED IN SAID PYROLIZING AND CONVERTING STEPS TO AN ASSOCIATED FURNACE

# FIG. 4B